(19) Europäisches Patentamt
European Patent Office
Office européen des brevets

(11) **EP 2 404 157 B1**

(12) **EUROPEAN PATENT SPECIFICATION**

(45) Date of publication and mention
of the grant of the patent:
**24.02.2021  Bulletin 2021/08**

(51) Int Cl.:
***G01N 15/14*** *(2006.01)*     ***G01N 21/51*** *(2006.01)*
***G01N 21/03*** *(2006.01)*

(21) Application number: **10707954.3**

(22) Date of filing: **04.03.2010**

(86) International application number:
**PCT/GB2010/050382**

(87) International publication number:
**WO 2010/100501 (10.09.2010 Gazette 2010/36)**

(54) **METHOD FOR MEASURING PARTICLE SIZE BY DYNAMIC OR STATIC LIGHT SCATTERING MEASUREMENT**

VERFAHREN ZUR MESSUNG VON PARTIKELGRÖSSEN ANHAND VON DYNAMISCHEN ODER STATISCHEN LICHTSTREUMESSUNGEN

PROCÉDÉ DE MESURE DE TAILLE DE PARTICULES PAR MESURE DE DISPERSION DE LUMIÈRE DYNAMIQUE OU STATIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.03.2009  US 209138 P**

(43) Date of publication of application:
**11.01.2012  Bulletin 2012/02**

(73) Proprietor: **Malvern Panalytical Limited Malvern, Worcestershire WR14 1XZ (GB)**

(72) Inventor: **CORBETT, Jason, Cecil, William Hereford HR4 0EU (GB)**

(74) Representative: **Barker Brettell LLP**
**100 Hagley Road**
**Edgbaston**
**Birmingham B16 8QQ (GB)**

(56) References cited:
**EP-A2- 1 801 563       EP-A2- 1 921 438**
**WO-A1-2008/086632    WO-A1-2008/092272**
**WO-A2-2007/021815    WO-A2-2009/025898**
**WO-A2-2010/041082    US-A- 4 573 796**
**US-A- 5 776 078       US-A1- 2002 028 434**
**US-A1- 2004 161 368    US-A1- 2006 103 849**
**US-A1- 2007 224 087    US-A1- 2008 216 563**
**US-B1- 6 473 171       US-B2- 6 781 690**

**Description**

**Field of the Invention**

This invention relates to methods for detecting characteristics of particles suspended in a liquid sample, such as through the use of Static Light Scattering (SLS) and/or Dynamic Light Scattering (DLS) measurements.

**Background of the Invention**

SLS and DLS measurements are typically performed using cuvettes with high-quality optical surfaces, which can be glass, in order to reduce scattering from static surfaces. These can be relatively expensive, and they can use a relatively large amount of sample material. It is also difficult to clean off residue from some types of samples, such as proteins.

US 2002/0028434 discloses a particle analyzer in which tagged particles are drawn through a suspended capillary tube where a predetermined volume is illuminated and fluorescent illumination scattered by particles is detected by a detector to count all particles.

EP 1921438 discloses a calibration method for a flow cytometer, in which fluorescence intensity values are used to calculate normalization factors to adjust data collected by different detector channels.

US 6,781,690 discloses an optical sensing method in which a medium comprising a plurality of aggregated nanoparticles is located in a microcavity and excited with a light source.

WO 2007/021815 discloses microfluidic chip apparatuses, systems and methods having fluidic and fiber optic interconnections, in which surfaces of first and second substrates are positioned together and form microfluidic channels, a light-guiding conduit inserted into a connection channel.

EP 1801563 discloses a fluidic structure including a channel and a series of sensing components to obtain information about objects travelling within the channel such as droplets or other objects carried by fluid.

US 4,573,796 discloses an apparatus for eliminating background interference during fluorescence measurements in a multiple laser flow cytometer.

WO2008/092272 discloses a method of detecting bacterial contamination in a platelet concentrate are performed using a dynamic light scattering (DLS) instrument and a sample holder. A sample of platelet concentrate can be held vertically or horizontally in a capillary in the sample holder. Alternatively, novel platelet storage bags modified to include an optically translucent window can be held within another variant of the sample holder. Still alternatively, platelet storage bags having one or more tubes detachably appended to the bag can be used. A sample is drawn off into an appended tube for placement directly into the sample holder. This method provides a number of related, non- invasive techniques for detecting whether bacteria has contaminated a platelet concentrate. Contamination indicators include a population of particles different from platelets, microparticles or proteins, bad-quality platelets, i.e. low DLS score, and very high or very low scattering intensity.

WO2008/086632 discloses a method of guiding a laser beam through a sample which, while exposed to the laser, is scanned by means of a digital scanner. The apparatus for performing this method comprises a laser light source and a digital scanner.

US2008/0216563 discloses a method and apparatus for continuously extracting liquid in at least two separate streams from a vessel, continuously diluting and/or conditioning a first stream in one or more stages, producing as a result of the extraction, dilution and/or conditioning, the first stream consisting of a dispersion of particles to be characterized, and diluting and/or conditioning a second stream, the second stream consisting of soluble components; and subjecting the first and second streams to various characterizing measurements.

**Summary of the Invention**

In accordance with the invention, there is provided a method according to claim 1.

In preferred embodiments, the liquid sample can be suspended in a capillary tube with a removable cover. The liquid sample can be suspended in the capillary tube by atmospheric pressure. The liquid sample can be suspended in the capillary tube by a sealed upper surface hydraulically connected to the cavity. The sealed upper surface can be a surface of a piston. The liquid sample can be suspended by a pumping action. The method can further include steps of storing capillary tubing with the instrument and cutting the capillary tube from the stored capillary tubing before the step of suspending the sample in the capillary tube. The method can, in an example not forming part of the present invention, further include the step of cutting the capillary tube from a length of capillary tubing before the step of suspending, with a same user performing both the step of cutting and the step of suspending. The step of providing can provide a capillary tube that is made of glass. The step of providing can provide a capillary tube that is made of plastic. The step of introducing the sample can introduce less than about 50 µl of liquid into the capillary tube. The step of introducing the sample can introduce less than about 10 μl of liquid into the capillary tube. The step of introducing the sample can introduce less than about 1 μl of liquid into the capillary tube. The method can further include the step of disposing of the capillary tube, and repeating the steps of receiving, suspending, illuminating, detecting, and disposing for further samples with new tubes for each of the further samples. The step of disposing can dispose of the capillary tube and the sample at the same time. The method can further include the step of removing the sample from the capillary tube before the step of disposing of the tube. The method can further include the step of causing the liquid sample to flow through the capillary tube to a detection position before the step of detecting. The method can further include further steps of causing further samples to flow through the capillary tube and further steps of detecting that each take place after one of the further steps of causing samples to flow. The step of causing the liquid to flow through the capillary tube can be performed continuously. The method can further include further steps of causing further samples to flow through additional capillary tubes and further steps of detecting that each take place after one of the further steps of causing samples to flow, with the steps of causing samples to flow being performed through disposable capillary tubes, and the method can further include steps of disposing of the capillary tubes between at least some of the steps of detecting.

In another general aspect not forming part of the present invention, an instrument for measuring light scattered by particles in a liquid sample is disclosed. This instrument includes a light source having an optical light output axis, a tube holder for a tube that includes means for suspending the liquid sample, positioned in the light output axis of the light source, and at least one scattered light detector, positioned to receive scattered light from the tube along an axis that is oriented at an angle with respect to the light output axis of the light source.

In preferred examples not forming part of the present invention the instrument can further include an integral capillary cutting implement. The capillary cutting implement is positioned to allow the capillary tube to be cut while it is positioned in the holder along the light output axis of the light source. The capillary cutting implement can include a stationary blade attached to the capillary holder. The holder can be part of a removable capillary carrier that can be removed from the instrument. The capillary tube holder can be operative to hold a capillary tube that has a square cross-section. The capillary tube holder can be operative to hold a capillary tube that has a round cross-section. The capillary tube can be made of glass. The capillary tube can be made of plastic. The capillary tube can be sealed at one or both ends. The tube holder can be operative to hold a tube that holds less than about 50 μl of liquid. The tube holder can be operative to hold a tube that holds less than about 10 μl of liquid. The tube holder can be operative to hold a tube that holds less than about 1 μl of liquid. The holder can be constructed and adapted to hold a tube that has an internal diameter of about 2 mm or less in the optical light output axis of the light source, with the internal diameter of the capillary tube constituting the means for suspending the liquid sample. The tube holder can be operative to hold a tube that is 0.5 mm in diameter or less. The apparatus can further include a pair of hydraulic fittings to hydraulically connect the tube to a process flow. The apparatus can further include at least a second scattered light detector positioned to receive scattered light from the tube along another angle with respect to the light output axis of the light source.

By holding a small drop of sample fluid in the path of an incident beam, scattering measurements for one or more scattering modes can be performed on a very small sample. The components used to hold the samples can then be disposed of or easily cleaned. The use of separate wicking surfaces to support samples allows for easy cleaning of surfaces, and these may even be provided on a disposable optical element. Capillary tubes can hold a very small amount of liquid for scattering measurements and then be discarded.

## Brief Description of the Drawing

Fig. 1 is a series of diagrams illustrating the use of optical components to trap sample droplets in various static and dynamic light scattering measurement configurations with one or two-face optical layouts;

Fig. 2 is diagram illustrating the use of optical components to trap a sample droplet in a dynamic light scattering measurement configuration with a multiple-face optical layout;

Fig. 3A is an isometric projection of a holder for use with light scattering measurement configurations such as those shown in Fig. 1;

Fig. 3B is a cross-sectional view of the holder of Fig. 3A that uses NIBS to position crossover of an incident beam;

Fig. 3C is a cutaway view of the holder of Fig. 3A;

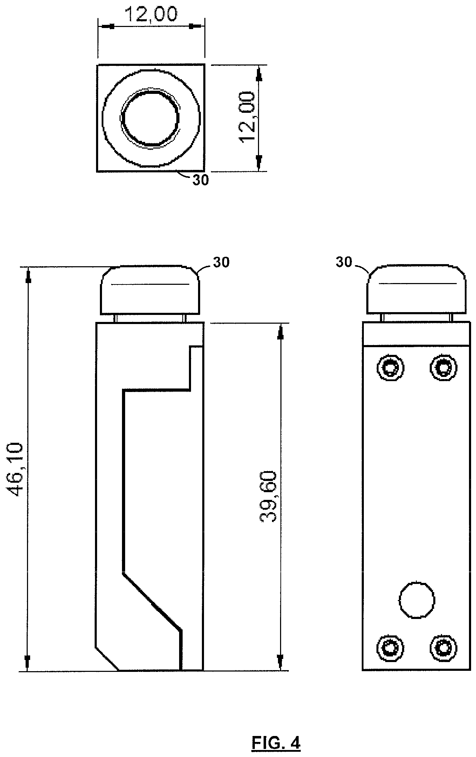

Fig. 4 is a three-view drawing of the holder showing illustrative overall dimensions to fit in commonly found cuvette holders;

**Fig. 5A** is a diagram showing a sample trapped by surface tension within a capillary;

**Fig. 5B** is a diagram of a sample trapped by atmospheric pressure via a pinched top;

**Fig. 5C** is a diagram of a sample trapped by atmospheric pressure via a sealed top;

**Fig. 5D** is a diagram of a sample trapped within a capillary as part of a flow path;

**Fig. 6** is a cross-sectional diagram showing an optical geometry for a capillary tube;

**Fig. 7A** is an illustrative implementation of a capillary carrier including a slot at the top to trap and seal a flexible tube (attached to the top end of the capillary) for atmospheric trapping of sample as show in Fig. 5B;

**Fig. 7B** is an illustrative implementation of a capillary carrier including a capillary cutter 44; and

**Fig. 8** is three-view drawing of the capillary carrier of Fig. 7A holder showing illustrative overall dimensions to fit in commonly found cuvette holders.

## Detailed Description

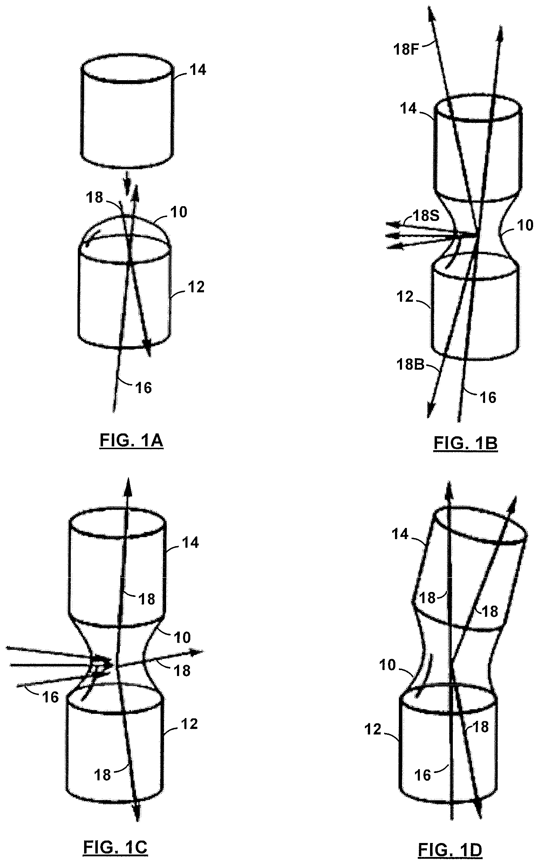

Referring to Fig. 1, a particle characteristics measuring instrument can perform trapped droplet sample presentation for static and dynamic light scattering instruments in forward, side and backscatter.

S/DLS measurements can require very small sample volumes to reduce costs. Further, S/DLS measurements require very high optical quality surfaces in order to reduce scattering from static surfaces, precluding the use of low optical quality disposable plastic cells. Further still, proteins, for example, are often very difficult to clean from glass cuvettes that are typically quite deep and prevent the entry of mechanical cleaning devices, such as brushes.

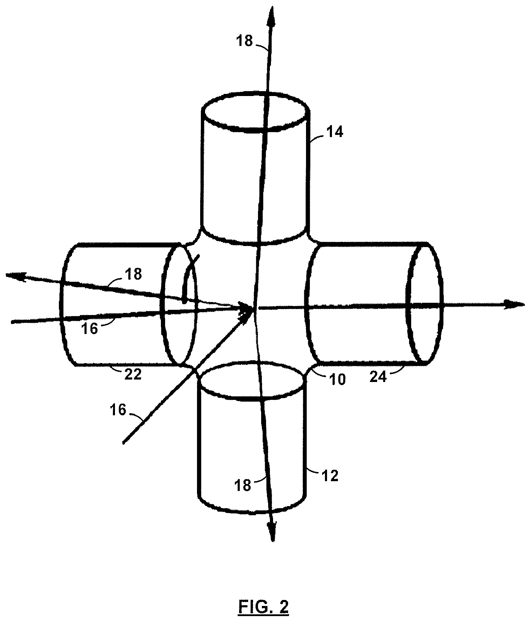

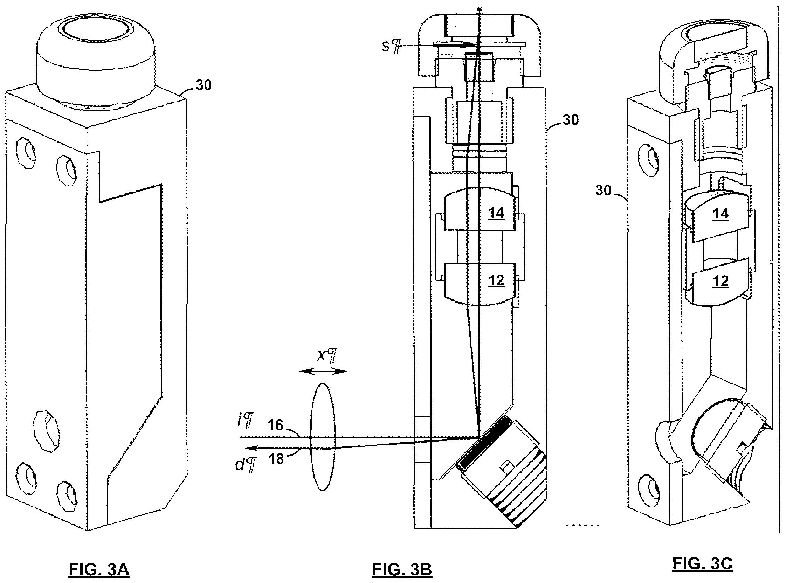

In the example instrument, a sample droplet 10 is placed on a lower optical surface 12 -- see Fig. 1(a). The incident light beam 16 and detected light beam 18 intersect within the droplet, with the droplet in contact only with the lower surface. The upper optical surface 14 is moved down until it makes contact with the sample - Fig. 1(b,c,d). The sample droplet wicks onto the upper surface, whilst remaining attached to the lower surface. The sample is trapped by surface tension. The upper surface is then drawn up to create a sample bridge within which the incident and detection beams can intersect. The distance between the optical surfaces would typically be of the order of 1-2mm. The position of the crossover (intersection of incident and detected light beams) within the trapped droplet can be set via separate optics: i.e. independently of the position of the optical surfaces. e.g. in backscatter via NIBS technology (described in US Pat. No. 6,016,195) - see Fig. 3 for example. The sample may also be trapped between more than two surfaces e.g. see Fig. 2 (12, 14, 22, 24), and opposing surfaces may be non-parallel - Fig. 1(d). The surfaces exposed to the sample may be any shape deemed convenient and/or necessary for efficient trapping of the sample via surface tension and/or optical deviation and focusing of the incident and detected beams.

In Fig. 1(b), the light enters the droplet 10 through one of the optical surfaces at some appropriate, well-defined angle and is detected in either forward 18F or backscatter 18B (again at some appropriate angle) through the optical surfaces or at a higher angle (typically, but not exclusively, 90 degrees to the input beam 18S) through the droplet side. In Fig. 1(c) the beam enters through the side of the droplet and is detected through either or both of upper and lower optical surfaces or through the droplet side.

In all proposed cases, Fig. 1(a)-(d), all optical beams (incident and detected) should have a well defined angle with respect to each other and should be pseudo-monochromatic, with centre wavelength, $\lambda$. The ISO standard for DLS (ISO 22412) states that the reported size should be +/-2% of the validated value of a standard sample. The Cumulants analysis is the standard basic reduction and it equates the measured quantity, g1, the correlation function, to the fit,

$$g^1(q,\tau) = exp(-\Gamma\tau)\left(1 + \frac{\mu^2}{2!}\tau^2 + .....\right) \qquad (1)$$

$\Gamma$, is related to the diffusion coeffient, D via the q vector by

$$\Gamma = q^2 D \qquad (2)$$

where

$$q = \frac{4\pi n}{\lambda} sin\left(\frac{\theta}{2}\right) \qquad (3)$$

In which $\theta$ is the angle between the incident and detected beams. n, is the refractive index of the dispersant in which the particles are dispersed. The particle radius, r, is then related to the diffusion coefficient via the Stokes-Einstein relation

$$D = \frac{k_B T}{6\pi n r} \qquad (4)$$

Where, $k_B$ is the Boltzmann constant and T is the temperature. Via Eq.(2), $q^2$ should be defined to < 2% to meet the ISO standard and thence $\theta$ to within $1.414 = \sqrt{2} \le 1.5\%$. We should also, then, define $\lambda$ to < 2% for DLS. The requirements of SLS are a subset of $\theta$ + /- 1.5% and $\lambda$ +/- 2%.

One example not forming part of the present invention of the scheme is shown in Fig. 3. The entire apparatus can fit inside the cuvette holder 30 of a Zetasizer Nano particle characterization instrument underneath the thermal cap in order to provide degree of thermal control appropriate to S/DLS. The Zetasizer Nano particle characterization instrument is available from Malvern Instruments of Malvern, UK, and is discussed in more detail in US application nos. 61/206,688 and 61/195,647.

Once measured the sample can be re-pipetted for further use and any material left on the optical surfaces removed with easy access.

Another approach involves a semi disposable sample presentation scheme for the measurement of dynamic and static light scattering for size and molecular weight determination in forward, side and backscatter. This scheme can allow for presentation of very small sample volumes to D/SLS instruments in an easy to use and semi-disposable format.

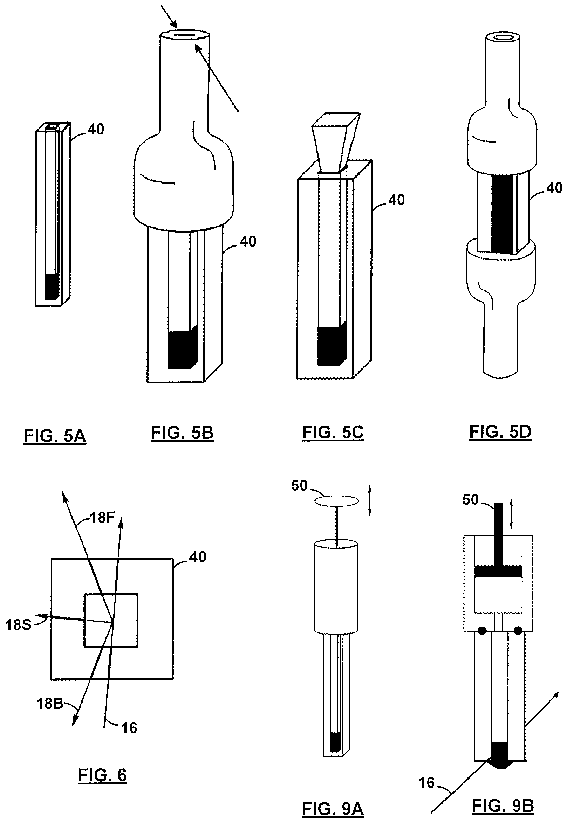

Good optical quality glass or plastic capillary tubing is available relatively cheaply now and the following scheme is proposed - Fig. 5. A length of capillary 40 is held in place (as required by the optical geometry of the instrument) and the tube filled from either end by attached tube or a pipette. The sample is retained by one of three mechanisms. In the first instance, the capillary is small enough to trap the sample by surface tension with the other end of the capillary left open to atmosphere - Fig. 5(a) - for example. In the second instance, the top of the capillary is sealed by some means - Fig. 5(b) and Fig. 5(c) for example - so that the sample is trapped within the capillary by atmospheric pressure at the capillary bottom (sample end in Fig. 5). In the third instance, the capillary forms part of a flow circuit - Fig. 5(d) for example.

The incident light beam may enter the sample through any side face of the capillary - Fig. 6. One or more detection beams may also exit the cell through any or all of the side faces of the capillary.

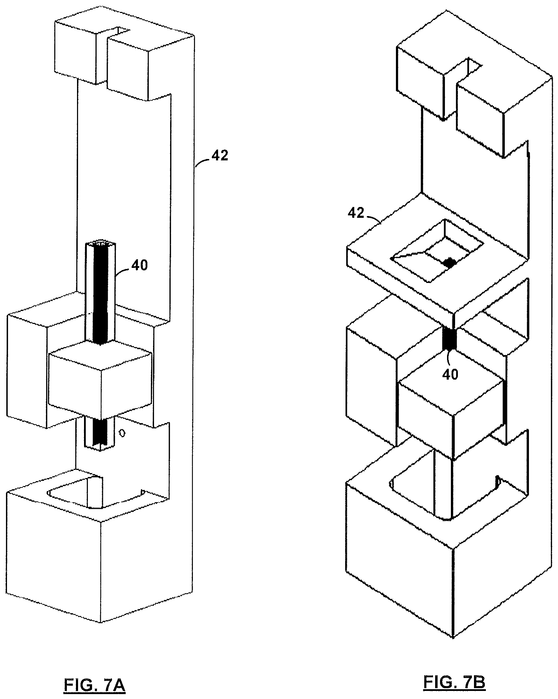

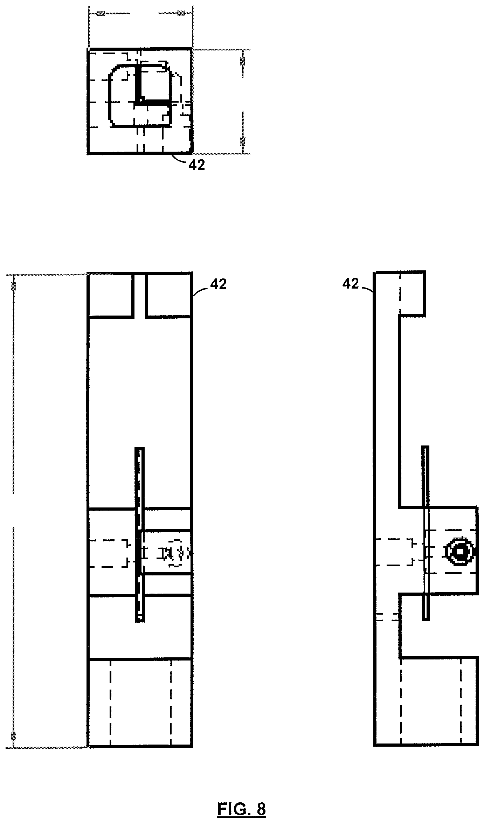

The capillary 40 is held in place by a carrier 42 - Fig. 7, which is then located into the instrument. The dimensions of the carrier match those of a standard cuvette, such that it enables use in an instrument in which standard cuvettes are used. Typical dimensions of such a carrier are shown in Fig. 8. A device for cutting the capillary to length whilst fitting into the carrier is also proposed, an example of which is shown in Fig. 7(b). Once in place the sample is pippetted into the bottom of the capillary as shown in Fig. 5 - the large hole in the base of the carrier - Fig. 7 - is included for this purpose. Once the measurement is complete the sample may then be re-pippetted out of the capillary for further analysis.

If the capillary becomes dirty in use it may be cheaply disposed of and a new one fitted for further measurements. Capillaries of 0.5mm internal dimensions and smaller are readily available thereby allowing convenient, semi-disposable measurement volumes of 10's to 100's of nanolitres for the first time.

Referring to Fig. 9, a piston 50 or other pumping mechanism may be provided to draw a precise amount of a liquid sample into a capillary tube, hold it (if necessary), and then expel it (if necessary). The use of a piston can allow even a very small drop to be positioned precisely within a capillary tube in the path of an incident beam. The piston may be advanced by a screw, a motor, or another suitable mechanism.

The scope of the present invention be limited only by the scope of the claims appended hereto.

## Claims

1. A method of measuring the size of particles in a liquid sample, comprising:

suspending the liquid sample in a capillary tube (40),

illuminating the suspended liquid sample along an illumination axis,

detecting at least a portion of the light along a first detection axis after it is scattered by the particles in the suspended liquid sample, wherein the illumination axis and the detection axis are oriented at an angle with respect to each other, and

deriving a dynamic or static light scattering measurement for a predetermined angular resolution from results of the step of detecting to derive the size of the particles;

and **characterized by**:

holding the capillary tube (40) in a capillary carrier (42) that is dimensioned to match a standard cuvette so that the carrier is configured to be removably placed in a standard cuvette carrier; and

placing the capillary carrier (42) in a cuvette carrier of a static or dynamic light scattering instrument.

2. The method of claim 1 wherein the liquid sample is suspended in the capillary tube (40) with a removable cover, by atmospheric pressure, by a pumping action or by a sealed upper surface hydraulically connected to a cavity in the capillary tube, the sealed upper surface optionally being a surface of a piston (50).

3. The method of claim 1 or 2, further including steps of storing capillary tubing with the instrument and cutting the capillary tube (40) from the stored capillary tubing before the step of suspending the sample in the capillary tube (40).

4. The method of any preceding claim wherein the capillary tube (40) is made of glass or of plastic.

5. The method of any preceding claim wherein less than about 50 $\mu$l, less than about 10 $\mu$l, or less than about 1 $\mu$l of liquid is suspended in the capillary tube (40).

6. The method of any preceding claim further including the step of disposing of the capillary tube (40), and repeating the steps of receiving, suspending, illuminating, detecting, and disposing for further samples with new tubes for each of the further samples, the step of disposing optionally comprising disposing of the capillary tube (40) and the sample at the same time and optionally removing the sample from the capillary tube before disposing of the capillary tube.

7. The method of any preceding claim further including the step of causing the liquid sample to flow through the capillary tube (40) to a detection position before the step of detecting, and optionally including further steps of causing further samples to flow through the capillary tube (40) and further steps of detecting that each take place after one of the further steps of causing samples to flow, the step of causing the liquid to flow through the capillary tube (40) optionally being performed continuously.

8. The method of claim 7 further including further steps of causing further samples to flow through additional capillary tubes and further steps of detecting that each take place after one of the further steps of causing samples to flow, wherein the steps of causing samples to flow are performed through disposable capillary tubes, and further including steps of disposing of the capillary tubes between at least some of the steps of detecting.

**Patentansprüche**

1. Verfahren zum Messen der Größe von Partikeln in einer flüssigen Probe, das Folgendes umfasst:

Suspendieren der flüssigen Probe in einem Kapillarröhrchen (40),

Beleuchten der suspendierten flüssigen Probe entlang einer Beleuchtungsachse,

Detektieren mindestens eines Abschnitts des Lichts entlang einer ersten Detektionsachse, nachdem es von den Partikeln in der suspendierten flüssigen Probe gestreut wurde, wobei die Beleuchtungsachse und die Detektionsachse mit Bezug aufeinander in einem Winkel ausgerichtet sind, und

Ableiten einer dynamischen oder statischen Lichtstreumessung für eine vorbestimmte Winkelauflösung aus den Ergebnissen des Schritts des Detektierens, um die Größe der Partikel abzuleiten;

und **gekennzeichnet durch**:

Halten des Kapillarröhrchens (40) in einem Kapillarträger (42), der so dimensioniert ist, dass er mit einer Standardküvette übereinstimmt, derart, dass der Träger dazu ausgelegt ist, entfernbar in einen Standardküvettenträger platziert zu werden; und

Platzieren des Kapillarträgers (42) in einen Küvettenträger eines statischen oder dynamischen Lichtstreuinstruments.

2. Verfahren nach Anspruch 1, wobei die flüssige Probe im Kapillarröhrchen (40) mit einer entfernbaren Abdeckung durch einen Pumpvorgang mittels atmosphärischem Druck oder durch eine versiegelte obere Fläche, die hydraulisch mit einem Hohlraum im Kapillarröhrchen verbunden ist, suspendiert wird, wobei die versiegelte obere Fläche wahlweise eine Fläche eines Kolbens (50) ist.

3. Verfahren nach Anspruch 1 oder 2, das vor dem Schritt des Suspendierens der Probe im Kapillarröhrchen (40) ferner die Schritte des Lagerns einer Kapillarverrohrung mit dem Instrument und des Abschneidens des Kapillarröhrchens (40) von der gelagerten Kapillarverrohrung beinhaltet.

4. Verfahren nach einem der vorhergehenden Ansprüche, wobei das Kapillarröhrchen (40) aus Glas oder aus Kunststoff besteht.

5. Verfahren nach einem der vorhergehenden Ansprüche, wobei weniger als ungefähr 50 μl, weniger als ungefähr 10 μl oder weniger als ungefähr 1 μl Flüssigkeit im Kapillarröhrchen (40) suspendiert wird.

6. Verfahren nach einem der vorhergehenden Ansprüche, das ferner den Schritt des Entsorgens des Kapillarröhrchens (40) sowie das Wiederholen der Schritte des Empfangens, des Suspendierens, des Beleuchtens, des Detektierens und des Entsorgens für weitere Proben mit neuen Röhrchen für jede der weiteren Proben beinhaltet, wobei der Schritt des Entsorgens wahlweise das gleichzeitige Entsorgen des Kapillarröhrchens (40) und der Probe und wahlweise vor dem Entsorgen des Kapillarröhrchens das Entfernen der Probe aus dem Kapillarröhrchen umfasst.

7. Verfahren nach einem der vorhergehenden Ansprüche, das ferner vor dem Schritt des Detektierens den Schritt des Bewirkens, dass die flüssige Probe durch das Kapillarröhrchen (40) zu einer Detektionsposition fließt, beinhaltet und wahlweise weitere Schritte des Bewirkens, dass weitere Proben durch das Kapillarröhrchen (40) fließen, und weitere Schritte des Detektierens, dass jeder nach einem der weiteren Schritte des Bewirkens, dass Proben fließen, erfolgt, wobei der Schritt des Bewirkens, dass die Flüssigkeit durch das Kapillarröhrchen (40) fließt, wahlweise kontinuierlich durchgeführt wird.

8. Verfahren nach Anspruch 7, das ferner weitere Schritte des Bewirkens, dass weitere Proben durch zusätzliche Kapillarröhrchen fließen, und weitere Schritte des Detektierens, dass jeder nach einem der weiteren Schritte des Bewirkens, dass Proben fließen, erfolgt, wobei die Schritte des Bewirkens, dass Proben fließen, mittels entsorgbaren Kapillarröhrchen durchgeführt werden, und ferner Schritte des Entsorgens der Kapillarröhrchen zwischen mindestens einigen der Schritte des Detektierens beinhaltet.

**Revendications**

1. Procédé de mesure de la taille de particules dans un échantillon liquide, comprenant :

la mise en suspension de l'échantillon liquide dans un tube capillaire (40),
l'éclairage de l'échantillon liquide en suspension le long d'un axe d'éclairage,
la détection d'au moins une partie de la lumière le long d'un premier axe de détection après qu'elle a été diffusée par les particules dans l'échantillon liquide en suspension, l'axe d'éclairage et l'axe de détection étant orientés avec un angle l'un par rapport à l'autre, et
la déduction d'une mesure de diffusion de lumière dynamique ou statique pour une résolution angulaire prédéterminée à partir de résultats de l'étape de détection pour déduire la taille des particules ;
et **caractérisé par** :

le maintien du tube capillaire (40) dans un support de capillaire (42) qui est dimensionné pour correspondre à une cuvette normale de telle sorte que le support est configuré pour être placé de façon amovible dans un support de cuvette normal ; et
la mise en place du support de capillaire (42) dans un support de cuvette d'un instrument de diffusion de lumière statique ou dynamique.

**2.** Procédé de la revendication 1 dans lequel l'échantillon liquide est mis en suspension dans le tube capillaire (40) avec un couvercle amovible, par la pression atmosphérique, par une action de pompage ou par une surface supérieure scellée raccordée hydrauliquement à une cavité dans le tube capillaire, la surface supérieure scellée étant éventuellement une surface d'un piston (50).

**3.** Procédé de la revendication 1 ou 2, comportant en outre des étapes de stockage de tubage capillaire avec l'instrument et découpe du tube capillaire (40) dans le tubage capillaire stocké avant l'étape de mise en suspension de l'échantillon dans le tube capillaire (40).

**4.** Procédé d'une quelconque revendication précédente dans lequel le tube capillaire (40) est fait de verre ou de plastique.

**5.** Procédé d'une quelconque revendication précédente dans lequel moins d'environ 50 μl, moins d'environ 10 μl ou moins d'environ 1 μl de liquide est mis en suspension dans le tube capillaire (40).

**6.** Procédé d'une quelconque revendication précédente comportant en outre l'étape de mise au rebut du tube capillaire (40), et la répétition des étapes de réception, mise en suspension, éclairage, détection et mise au rebut pour d'autres échantillons avec de nouveaux tubes pour chacun des autres échantillons, l'étape de mise au rebut comprenant éventuellement la mise au rebut simultanée du tube capillaire (40) et de l'échantillon et éventuellement le retrait de l'échantillon du tube capillaire avant la mise au rebut du tube capillaire.

**7.** Procédé d'une quelconque revendication précédente comportant en outre l'étape de mise en circulation de l'échantillon liquide à travers le tube capillaire (40) jusqu'à une position de détection avant l'étape de détection, et comportant éventuellement d'autres étapes de mise en circulation d'autres échantillons à travers le tube capillaire (40) et d'autres étapes de détection qui ont chacune lieu après une des autres étapes de mise en circulation d'échantillons, l'étape de mise en circulation du liquide à travers le tube capillaire (40) étant éventuellement effectuée en continu.

**8.** Procédé de la revendication 7 comportant en outre d'autres étapes de mise en circulation d'autres échantillons à travers des tubes capillaires supplémentaires et d'autres étapes de détection qui ont chacune lieu après une des autres étapes de mise en circulation d'échantillons, les étapes de mise en circulation d'échantillons étant effectuées à travers des tubes capillaires jetables, et comportant en outre des étapes de mise au rebut des tubes capillaires entre au moins certaines des étapes de détection.

FIG. 1A

FIG. 1B

FIG. 1C

FIG. 1D

FIG. 2

**FIG. 3A**

**FIG. 3B**

**FIG. 3C**

FIG. 4

FIG. 5A      FIG. 5B      FIG. 5C      FIG. 5D

FIG. 6

FIG. 9A      FIG. 9B

FIG. 7A

FIG. 7B

FIG. 8

**REFERENCES CITED IN THE DESCRIPTION**

**Patent documents cited in the description**

- US 20020028434 A
- EP 1921438 A
- US 6781690 B
- WO 2007021815 A
- EP 1801563 A
- US 4573796 A
- WO 2008092272 A
- WO 2008086632 A
- US 20080216563 A
- US 6016195 A
- US 61206688 B
- US 61195647 B